(19) Europäisches Patentamt
European Patent Office
Office européen des brevets

(11) **EP 1 804 396 B1**

(12) **EUROPÄISCHE PATENTSCHRIFT**

(45) Veröffentlichungstag und Bekanntmachung des Hinweises auf die Patenterteilung:
**22.02.2017   Patentblatt 2017/08**

(51) Int Cl.:
*H04B 7/08* [(2006.01)]        *H04L 27/26* [(2006.01)]

(21) Anmeldenummer: **06125554.3**

(22) Anmeldetag: **07.12.2006**

(54) **Empfänger und Verfahren zum optimierten Demodulieren und Dekodieren von digitalen Funksignalen**

Receiver and method for optimised demodulation and decoding of digital radio signals

Récepteur et procédé de démodulation et décodage optimisés de signaux radio numériques

(84) Benannte Vertragsstaaten:
**DE FR GB IT**

(30) Priorität: **03.01.2006   DE 102006000639**

(43) Veröffentlichungstag der Anmeldung:
**04.07.2007   Patentblatt 2007/27**

(73) Patentinhaber: **ROBERT BOSCH GMBH
70442 Stuttgart (DE)**

(72) Erfinder:
- **Schaefer, Wolfgang
  31141 Hildesheim (DE)**
- **Passoke, Jens
  30966 Hemmingen (DE)**

(56) Entgegenhaltungen:
EP-A1- 1 566 899     US-B1- 6 172 970
US-B1- 6 512 738

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen Empfänger zum optimierten Demodulieren und Dekodieren von digital modulierten Funksignalen, insbesondere in einem Empfängersystem, dass mehr als ein Signal empfängt. Dabei können diese Signale z.B. über verschiedene Antennen und Empfangszweige aber auch auf unterschiedlichen Frequenzen und zumindest einem zum Teil gleichen Pfad empfangen werden. Die Erfindung betrifft weiterhin ein Verfahren zum optimierten Demodulieren und Dekodieren von digital modulierten Funksignalen.

Der herkömmliche Rundfunk wird aktuell ergänzt durch den Standard DRM (Digital Radio Mondial). Dabei werden Signale des DRM-Standards in den gleichen Frequenzbändern ausgestrahlt, wie die des bisherigen analogen Mittelwellenrundfunks. Beim DRM-Standard werden die Signale digital moduliert gesendet. Die Dekodierung der entsprechenden DRM-Funksignale muss somit in einer digitalen Signalverarbeitungseinheit durchgeführt werden.

Der DRM-Standard erlaubt, ebenso wie beim DAB und FM-RDS System, dass Funksignale gleichen Inhalts auf verschiedenen Frequenzen ausgestrahlt werden. Jedes der Funksignale enthält eine Information , die angibt, auf welchen anderen Frequenzen ein Signal gleichen Inhalts gesendet wird. Somit ermöglicht der DRM-Standard die automatische Umschaltung auf Alternativfrequenzen, insbesondere bei Schwankungen der Signalqualität. Von anderen Rundfunkstandards und entsprechenden Empfängern sind Verfahren bekannt, bei denen die verschiednen Empfangsfrequenzen auf vorhandene Feldstärke und Signalinhalt getestet werden. Dieses ist sinnvoll, da zeitweise in bestimmten Regionen ein Funksignal auf einer Frequenz nicht hinreichend stark empfangbar ist, wobei in einem anderen Funksignal auf einer anderen Frequenz das entsprechende Signal mit ausreichender Signalqualität empfangen werden kann.

Bei herkömmlichen mobilen Rundfunkempfängern für den analogen FM-Empfang sind zur Verbesserung der Empfangsqualität Vorrichtungen bekannt, bei denen mit Hilfe von zwei oder mehreren Antennen ein Diversity Empfang realisiert wird. Der Empfänger dagegen hat meist nur einen Signalpfad zur weiteren Verarbeitung des empfangenen Funksignals zur Verfügung. Die sich anschließende Signalverarbeitung wählt dann das jeweilige Funksignal mit Hilfe einer Schalteinheit so aus, dass das Funksignal mit der besseren Signalqualität verwendet wird, um z.B. das Audio-Signal oder TMC Daten zu extrahieren.

Weiterhin sind sog. Phasendiversity Systeme bekannt, bei denen kontinuierlich zwei oder mehrere Funksignale empfangen werden und so kombiniert werden, dass das resultierende Signal eine verbesserte Empfangsqualität ermöglicht. Ein mögliches Verfahren ist unter dem Namen Maximum-Ratio-Combining bekannt, bei dem die Signale umgekehrt proportional zu ihrem Signal-Rausch Abstand gewichtet und dann addiert werden.

Bei DAB-Systemen (DAB: Digital Audio Broadcasting) nutzt man Sendeantennendiversity, um Funksignale auf verschiedenen Ausbreitungswegen aber gleicher Sendefrequenz auszustrahlen. Dies erspart es den jeweiligen Empfängern, für den verbesserten Empfang der Funksignale zwei Antennen und zwei Empfangseinheiten vorsehen zu müssen.

Die Patentschrift US 6,512,738 B1 zeigt eine Vorrichtung zum Empfangen von Radiowellen.

Die Patentschrift US 6,172,970 B1 zeigt einen tragbaren Receiver.

Die Offenlegungsschrift EP 1 566 899 A1 zeigt einen Signalsynchronisierer.

Es ist Aufgabe der vorliegenden Erfindung, einen verbesserten Empfänger zum optimierten Demodulieren und Dekodieren von digitalen Funksignalen zur Verfügung zu stellen, mit der eine Verbesserung des DRM-Empfangs möglich ist. Es ist weiterhin Aufgabe der vorliegenden Erfindung ein Verfahren zum optimierten Demodulieren und Dekodieren von digitalen Funksignalen zur Verfügung zu stellen.

Diese Aufgabe wird durch den Empfänger nach Anspruch 1 sowie dem Verfahren nach Anspruch 6 gelöst.

Weitere vorteilhafte Ausgestaltungen der Erfindung sind in den abhängigen Ansprüchen angegeben.

Gemäß einem ersten Aspekt der vorliegenden Erfindung ist ein Empfänger zum optimierten Demodulieren und Dekodieren von digitalen Funksignalen vorgesehen. Der Empfänger umfasst eine erste und eine zweite Empfangseinheit zum Empfangen eines ersten bzw. zweiten Funksignals und zum Umsetzen des ersten bzw. zweiten Funksignals zu einem ersten bzw. zweiten digitalen Zwischenfrequenzsignal.

Das erste und das zweite Funksignal weisen unterschiedliche Frequenzen auf.

Das erste und das zweite digitale Zwischenfrequenzsignal weist jeweils eine Anzahl von Unterträgern auf. Ferner ist ein erster und ein zweiter Kanalschätzer vorgesehen, um eine Kanalschätzung auf das erste bzw. zweite digitale Zwischenfrequenzsignal durchzuführen, so dass ein erstes bzw. zweites entzerrtes digitales Zwischenfrequenzsignal erhalten wird. Mit Hilfe einer Signalkombiniereinheit werden das erste und das zweite digitale Zwischenfrequenzsignal miteinander kombiniert, indem sich entsprechende Unterträger des ersten und des zweiten entzerrten digitalen Zwischenfrequenzsignals miteinander kombiniert werden. Mit Hilfe eines Kanaldecodierers wird das kombinierte digitale Zwischenfrequenzsignal zu einem Bit-Datenstrom dekodiert.

Der erfindungsgemäße Empfänger weist die Möglichkeit auf, mehrere Signale zu empfangen und derart zu kombinieren, dass die Empfangsperformance gegenüber dem Empfang nach einem herkömmlichen Diversity-Verfahren verbessert ist. Dabei kann der Empfang mehrerer Signale beispielsweise mit Hilfe mehrer Antennen und sich daran anschließenden Empfangspfaden realisiert werden. Beispielsweise ist aber auch die Nutzung der selben Antenne und anschließender direkter, breitbandiger Umsetzung der beispielsweise auf verschiedenen Frequenzen empfangenen Signale in die digitale Ebene zur weiteren Signalverarbeitung möglich. Die empfangenen Funksignale werden jeweils in ein digitales Zwischenfrequenzsignal gewandelt und so in die digitale Ebene umgesetzt. Hier besteht jedes Signal aus mehreren Unterträgern. Beim Auftreten von Störungen ist charakteristisch für die Übertragung von Funksignalen in dem betrachteten Frequenzbereich, dass sich die Signalpegel des digitalen Zwischenfrequenzsignals für bestimmte Unterträger bzw. für Unterträger in einem bestimmten Frequenzbereich aufgrund von Fadingstörungen, Interferenzen und dergleichen verringert. Zum Ausgleich einer daraus resultierenden Verschlechterung der Signalqualität wird zumindest bezüglich der Unterträger mit der reduzierten Signalqualität auf die entsprechenden Unterträger des auf der weiteren Sendefrequenz empfangenen Funksignals zurückgegriffen und jeweils durch geeignete Kombination der Signale auf den betreffenden Unterträgern beider digitaler Zwischenfrequenzsignale die verschlechterte Signalqualität auf den entsprechenden Unterträgern reduziert bzw. kompensiert. Dadurch lässt sich eine Verbesserung der Fehlerrate des resultierenden Bit-Datenstroms erreichen. Gegenüber dem Stand der Technik hat ein solcher Empfänger den Vorteil, dass nur die Unterträger des digitalisierten Signals oder Gruppen hiervon, die aufgrund von Fadingstörungen und dergleichen Signale mit reduzierten Signalqualitäten aufweisen, in der Signalkombiniereinheit kombiniert werden, wodurch das entsprechende weitere Funksignal bzw. das daraus erhaltene digitale Zwischenfrequenzsignal verbessert wird. Dies liefert erheblich verringerte Fehlerraten bei dem resultierenden Bit-Datenstrom als es bei der Kombination zweier Empfangssignale mit Hilfe der Maximum-Ratio-Combining-Methode der Fall ist.

Gemäß einer weiteren Ausführungsform der Erfindung kombiniert die Signalkombiniereinheit das erste und das zweite digitalisierte Zwischenfrequenzsignal, indem die Signale von sich entsprechenden Unterträgern des ersten und des zweiten digitalen Zwischenfrequenzsignals phasenrichtig addiert werden. Insbesondere können die sich entsprechenden Unterträger des ersten und des zweiten digitalen Zwischenfrequenzsignals vor ihrer Addition gewichtet werden, insbesondere abhängig von entsprechenden Gewichtungsfaktoren, die umgekehrt proportional zu einem Signalrauschabstand des jeweiligen Träger sind. Eine weitere Ausführungsform ist eine Multiplikation mit einem komplexen Koeffizienten und anschließende Addition derart, dass sich z.B. von außen überlagerte Störungen auslöschen. Weiterhin kann das Kombinieren der Signale sich entsprechender Unterträger umfassen, dass eines der beiden Signale für das kombinierte digitale Zwischenfrequenzsignal unverändert verwendet wird, wenn die Signalqualität des entsprechenden Signals größer als ein Qualitätsschwellwert ist.

Weiterhin kann eine Synchronisationseinheit vorgesehen sein, um eines der digitalen Zwischenfrequenzsignale mit einer Verzögerungszeit so zu verzögern, dass die beiden digitalen Zwischenfrequenzsignale zueinander synchron sind. Dadurch können z.B. Laufzeitunterschiede zwischen den beiden Funksignalen ausgeglichen werden, so dass in der Signalkombiniereinheit nur Signale entsprechender Unterträger einer identischen zeitlichen Position der digitalen Zwischenfrequenzsignale kombiniert werden. Insbesondere kann die Synchronisationseinheit gestaltet sein, um die Verzögerungszeit gemäß einem Kreuzkorrelationsverfahren zu bestimmen.

Gemäß einem weiteren Aspekt der vorliegenden Erfindung ist ein Verfahren zum optimierten Demodulieren und Dekodieren von digitalen DRM-Funksignalen vorgesehen. Das Verfahren umfasst die Schritte des Empfangens eines ersten und eines zweiten Funksignals, des Umwandelns des ersten und des zweiten Funksignals zu einem ersten bzw. zweiten digitalen Zwischenfrequenzsignal, wobei das erste und das zweite digitale Zwischenfrequenzsignal jeweils eine Anzahl von Unterträgern aufweist. Weiterhin wird eine Kanalschätzung auf das erste und das zweite digitale Zwischenfrequenzsignal durchgeführt, um ein erstes bzw. zweites entzerrtes digitales Zwischenfrequenzsignal zu erhalten. Das erste und das zweite digitale Zwischenfrequenzsignal werden kombiniert, indem die Signale die entsprechenden Unterträger des ersten und des zweiten entzerrten digitalen Zwischenfrequenzsignals miteinander kombiniert werden. Das kombinierte Zwischenfrequenzsignal wird anschließend zu einem Bit-Datenstrom dekodiert.

Das erfindungsgemäße Verfahren stellt eine Möglichkeit dar, die Signalqualität in einem Mehrempfängersystem oder einem breitbandig empfangenden System z.B. mit direkter Abtastung der HF beim Empfangen von DRM-Funksignalen zu verbessern.

Gemäß einer bevorzugten Ausführungsform werden das erste und das zweite digitale Zwischenfrequenzsignal kombiniert, indem die Signale der sich entsprechenden Unterträger des ersten und des zweiten digitalen Zwischenfrequenzsignals in der Phase korrigiert und anschließend addiert werden. Insbesondere können das erste und das zweite digitale Zwischenfrequenzsignal kombiniert werden, indem die Signale der sich entsprechenden Unterträger des ersten und des zweiten digitalen Zwischenfrequenzsignals vor ihrer Addition gewichtet werden. Diese Gewichtung kann z.B. umgekehrt proportional zu einem Signalrauschabstand des jeweiligen Unterträgers oder von Gruppen von Unterträgern sein, aber auch derart ausgelegt werden, dass sich Störer von außen durch gegenphasige Addition auslöschen.

Vorzugsweise wird eines der digitalen Zwischenfrequenzsignale mit einer Verzögerungszeit so verzögert, dass die beiden digitalen Zwischenfrequenzsignale zueinander synchronisiert werden. Insbesondere wird die Verzögerungszeit gemäß einem Kreuzkorrelationsverfahren bestimmt.

Bevorzugte Ausführungsformen der Erfindung werden nachfolgend anhand der beigefügten Zeichnungen näher erläutert. Es zeigen:

Figur 1 ein Blockschaltbild eines erfindungsgemäß DRM-Empfängers;

Figur 2 Signalrauschverhältnisse für mehrere Unterträger zweier Zwischenfrequenzsignale zum Veranschaulichen des erfindungsgemäßen Verfahrens.

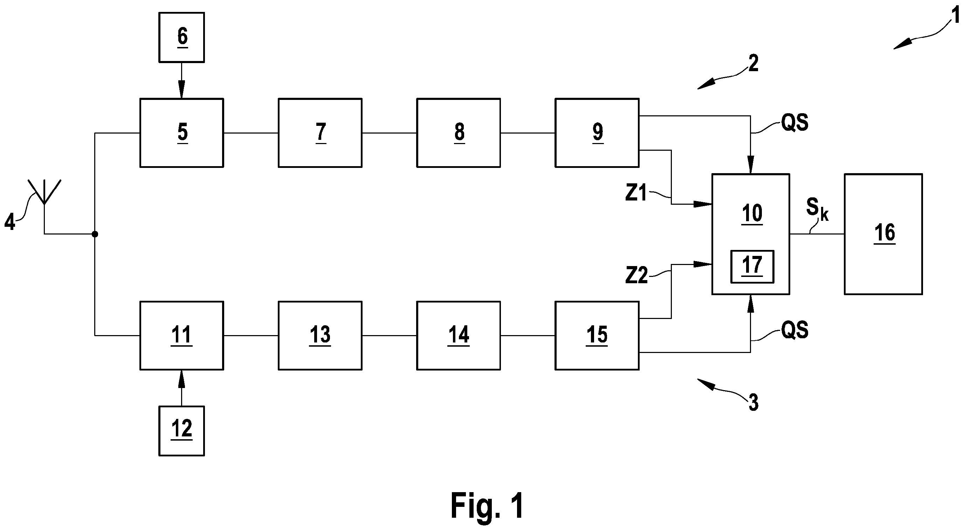

In Figur 1 ist ein Blockschaltbild eines erfindungsgemäßen DRM-Empfängers 1 dargestellt. Der DRM-Empfänger 1 umfasst einen ersten Empfangspfad 2 und einen zweiten Empfangspfad 3. Über eine gemeinsame Antenne 4 wird ein erstes und ein zweites Funksignal empfangen, die in dem ersten bzw. zweiten Empfangspfad 2, 3 zu einem ersten bzw. zweiten entzerrten digitalen Zwischenfrequenzsignal Z1, Z2 verarbeitet werden. Das erste und zweite Funksignal weisen entsprechend einem Sendeantennen-Diversity denselben Inhalt auf, der auf unterschiedlichen Sendefrequenzen gesendet wird. Das erste Funksignal wird über eine erste Vorstufe 5 (auch Frontend genannt) in dem ersten Empfangspfad 2 empfangen, die beispielsweise einen Bandpassfilter, einen Mischer und einen Zwischenfrequenzfilter (nicht gezeigt) enthalten kann, um das zu empfangene erste Funksignal zu detektieren und auf eine Zwischenfrequenz zu demodulieren. Die Zwischenfrequenz kann beispielsweise durch einen einstellbaren ersten Frequenzgeber 6 der ersten Vorstufe 5 bereitgestellt werden, um die erste Vorstufe 5 auf die Frequenz des zu empfangenden ersten Funksignals abzustimmen. Eine solche Vorstufe zum Empfangen des Funksignals und zum Generieren des digitalen Zwischenfrequenzsignals ist aus dem Stand der Technik hinreichend bekannt. Das digitale Zwischenfrequenzsignal wird anschließend in einem ersten Analog-Digital-Wandler 7 digitalisiert und anschließend einer Filter- und Transformierstufe 8 zugeführt, die eine digitale Filterung des digitalen Zwischenfrequenzsignals vornimmt, und das gefilterte digitale Zwischenfrequenzsignal anschließend einer Fourier-Transformation (FFT: Fast Fourier-Transformation) unterzieht. Die Fourier-Transformation dient dazu, ein Spektrum von OFDM-Signalen, d.h. eine Anzahl von Unterträgersignalen, die einem bestimmten Unterträger zugeordnet sind, zur Verfügung zu stellen, das anschließend einem ersten Kanalschätzer 9 zur Verfügung gestellt wird. Die erste Filter- und Transformierstufe 8 steht mit dem ersten Frequenzgeber 6 in Verbindung, so dass eine Synchronisation des digitalen Zwischenfrequenzsignals durchgeführt werden kann, um ein geeignetes Spektrum von OFDM-Signalen zu erhalten. Der erste Kanalschätzer 9 entzerrt das digitale Zwischenfrequenzsignal und stellt dieses als erstes entzerrtes digitales Zwischenfrequenzsignal Z1 einer Kombiniereinheit 10 zur Verfügung.

Der zweite Empfangspfad 3 ist entsprechend wie der erste Empfangspfad 2 aufgebaut. Der zweite Empfangspfad 3 umfasst eine zweite Vorstufe 11 die mit einem zweiten Frequenzgeber 12 gekoppelt ist, der die Vorstufe 11 auf das zu empfangende zweite Funksignal abstimmt. Die zweite Vorstufe 11 ist mit einem zweiten Analog-Digital-Wandler 13 verbunden, um das demodulierte zweite Funksignal in ein digitales Zwischenfrequenzsignal zu wandeln, das anschließend einer zweiten Filter- und Transformiereinheit 14 zur Verfügung gestellt wird. Das digitalisierte und transformierte digitale Zwischenfrequenzsignal wird in einem zweiten Kanalschätzer 15 entzerrt und ein zweites entzerrtes digitales Zwischenfrequenzsignal Z2 der Kombiniereinheit 10 zur Verfügung gestellt.

Das erste und das zweite digitale Zwischenfrequenzsignal Z1 und Z2 stellen jeweils ein OFDM-Spektrum dar, dass durch die Fourier-Transformation erzeugt wurde, und dessen OFDM-Signale auf den Unterträgern durch die Kanalschätzung in ihrer Phase und Amplitude mit Hilfe von in den digitalen Zwischenfrequenzsignalen Z1, Z2 befindlichen Pilotsignalen in bekannter Weise korrigiert wurden. In der ersten bzw. zweiten Filter- und Transformiereinheit 8, 14 wird als eine Angabe über die Signalqualität des jeweiligen Signalpfads ein Signal-Rauschverhältnis jedes einzelnen OFDM-Signals auf jeden der Unterträgern der beiden digitalen Zwischenfrequenzsignale Z1, Z2 bestimmt und der Kombiniereinheit 10 als Qualitätsinformation QS zur Verfügung gestellt. Die Qualitätsinformation QS enthält für jeden Unterträger das Signal-Rauschverhältnis der darüber übertragenen OFDM-Signale sowie das mittlere Signal-Rauschverhältnis des gesamten Signals.

In der Kombiniereinheit 10 werden nun das erste und das zweite digitale Zwischenfrequenzsignal in einer Synchronisationseinheit 17 zueinander synchronisiert, indem der entsprechende zeitliche Versatz zwischen dem ersten und zweiten digitalen Zwischenfrequenzsignal mit Hilfe eines Korrelationsverfahrens, insbesondere eines Kreuzkorrelationsverfahrens ermittelt wird. Abhängig von den Zeitversatz wird eines der beiden digitalen Zwischenfrequenzsignale Z1, Z2 zeitlich verzögert und somit die beiden digitalen Zwischenfrequenzsignale Z1, Z2 zeitlich synchronisiert. Ferner werden die Unterträger der digitalen Zwischenfrequenzsignale frequenzrichtig einander zugeordnet. Die Kreuzkorrelation kann mit Hilfe des bei beiden digitalen Zwischenfrequenzsignalen identischen SDC-Symbol Blocks durchgeführt werden, womit die Verzögerung auf einige Abtastsamples genau berechnet werden kann. Sofern beide Signale bis auf die Bit-Ebene prozessiert werden können, gibt es auch die Möglichkeit, zwei dekodierte Datenblöcke von je 400 ms Dauer auf Bit-Ebene mit Hilfe einer Exklusiv-Oder-Verknüpfung zu verknüpfen und so den Sample-Offset zu bestimmen. Das zuerst eintreffende Signal wird dann digital um die ermittelte Anzahl von Samples verzögert, bevor beide Signale addiert werden können.

Sind die Signalqualitäten der OFDM-Signale in einem der beiden digitalen Zwischenfrequenzsignale Z1, Z2 ausreichend, d.h. die jeweiligen Signal-Rauschverhältnisse für das gesamte Symbol bzw. auf den Unterträgern ist größer als ein vorgegebener Signal-Rauschverhältnis-Schwellwert, so kann das entsprechende digitale Zwischenfrequenzsignal unverändert als kombiniertes digitales Zwischenfrequenzsignal an einen Kanaldekodierer 16 weitergegeben werden, der das kombinierte digitales Zwischenfrequenzsignal zu einem Bit-Datenstrom dekodiert. Der Bit-Datenstrom kann dann entsprechend in Audio-Daten umgewandelt und ausgegeben werden.

Charakteristisch für die Übertragung von DRM-Signalen ist, dass der Signalpegel in einem Frequenz-Bereich innerhalb des OFDM-Spektrums eines Übertragungskanales aufgrund von Fading-Störungen, Interferenzen und dergleichen einbricht. D.h., die Signal-Rauschverhältnisse der OFDM-Signale sind in dem gestörten Bereich des OFDM-Spektrums reduziert und können dann unter dem Signal-Rauschverhältnis-Schwellwert liegen. In diesem Fall können beispielsweise die OFDM-Signale der entsprechenden Unterträger, die ein zu niedriges Signal-Rauschverhältnis aufweisen, durch die OFDM-Signale der jeweils zugeordneten Unterträger des OFDM-Spektrums des jeweiligen anderen digitalen Zwischenfrequenzsignals ersetzt werden, vorausgesetzt, dass deren Signal-Rauschverhältnisse über dem Signal-Rauschverhältnis-Schwellwert liegen. Liegen beispielsweise die Signal-Rauschverhältnisse der OFDM-Signale in dem gestörten Bereich bei beiden digitalen Zwischenfrequenzsignalen unter dem Signal-Rauschverhältnis-Schwellwert, so können die OFDM-Signale des entsprechenden Unterträgers phasenrichtig addiert werden. Vorzugsweise werden die OFDM-Signale der entsprechenden Unterträger vor der phasenrichtigen Addition gewichtet und zwar mit einem Gewichtungsfaktor, der dem Kehrwert des Signal-Rauschverhältnisses des jeweiligen OFDM-Signals des entsprechenden Unterträgers des anderen digitalen Zwischenfrequenzsignals entspricht. Als Formel ausgedrückt:

$$S_k = S1_u/SNR2_U + S2_u/SNR1_u,$$

wobei $S_k$ dem kombinierten OFDM-Signal eines Unterträgers, u der Nummer des Unterträgers,
$S1_u$ dem OFDM-Signal eines Unterträgers des ersten digitalen Zwischenfrequenzsignals, $S2_u$ dem OFDM-Signal eines Unterträgers des zweiten digitalen Zwischenfrequenzsignals,
$SNR1_u$ dem Signal-Rauschverhältnis des OFDM-Signals des Unterträgers u des ersten digitalen Zwischenfrequenzsignals und
$SNR2_u$ dem Signal-Rauschverhältnis des OFDM-Signals des Unterträgers u des zweiten digitalen Zwischenfrequenzsignals entspricht. Es kann aber auch eine komplexe Multiplikation und anschließende Addition durchgeführt werden.

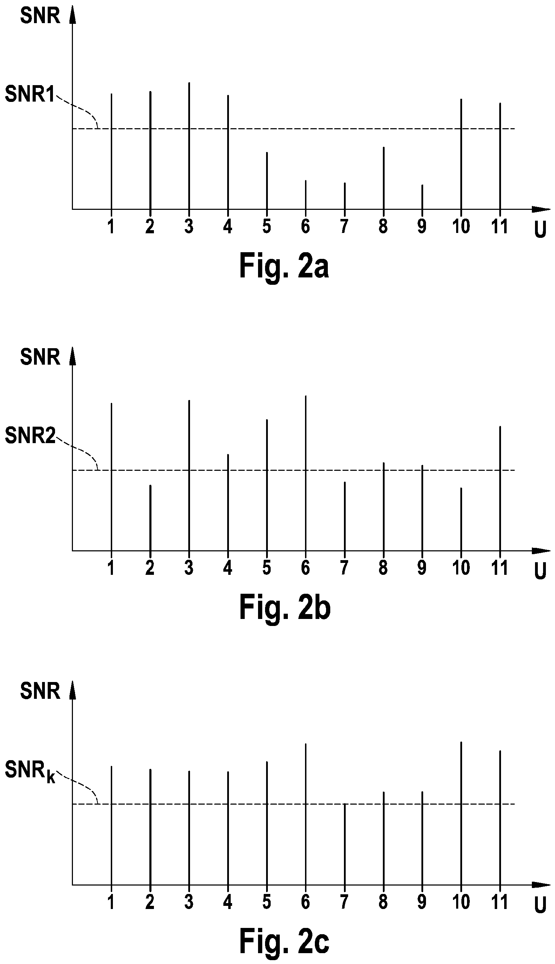

Das erfindungsgemäße Verfahren ist mit Hilfe der Figuren 2a bis 2c dargestellt. Figur 2a zeigt für elf Unterträger U die einzelnen Signal-Rauschverhältnisse der OFDM-Signale auf den entsprechenden Unterträgern des ersten digitalen Zwischenfrequenzsignals Z1. Analog zeigt Figur 2b die Signal-Rauschverhältnisse der OFDM-Signale auf elf entsprechenden Unterträgern U des zweiten digitalen Zwischenfrequenzsignals Z2. Der Signal-Rauschverhältnis-Schwellwert ist in beiden Darstellungen als gestrichelte waagrechte Linie eingezeichnet. Ausgehend von dem gezeigten OFDM-Spektrum des ersten digitalen Zwischenfrequenzsignals Z1 erkennt man, dass die ersten vier Unterträger U1 bis U4 Signal-Rauschverhältnisse aufweisen, die über dem Signal-Rauschverhältnis-Schwellwert liegen. Aufgrund von Fading-Störungen und dergleichen liegen die Signal-Rauschverhältnisse in einem gestörten Bereich, der den Unterträgern U5 bis U9 entspricht, unter dem Signal-Rauschverhältnis-Schwellwert. Bei dem OFDM-Spektrum des zweiten digitalen Zwischenfrequenzsignals Z2 liegen die OFDM-Signale des zweiten, siebten und zehnten Unterträgers U2, U7, U10 unter dem Signal-Rauschverhältnis-Schwellwert.

Die Kombiniereinheit 10 kombiniert nun gemäß einer bevorzugten Ausführungsform die einzelnen OFDM-Signale von einander zugeordneten Unterträgern in folgender Weise miteinander:

- Liegt das Signal-Rauschverhältnis auf einem bestimmten Unterträger über dem Signal-Rauschverhältnis-Schwellwert, so wird das OFDM-Signal dieses Unterträgers unverändert an den Kanaldekodierer weitergeleitet.

- Liegt das Signal-Rauschverhältnis auf einem bestimmten Unterträger des ersten digitalen Zwischenfrequenzsignals Z1 unter dem Signal-Rauschverhältnis-Schwellwert, so wird überprüft, ob das Signal-Rauschverhältnis des entsprechenden Unterträgers des anderen, d.h. des zweiten digitalen Zwischenfrequenzsignals über dem Signal-Rauschverhältnis-Schwellwert liegt. Wenn ja, so wird der bestimmte Unterträgers des zweiten digitalen Zwischenfrequenzsignals an den Kanaldekodierer weitergegeben. Ist jedoch das Signal-Ruschverhältnis beider bestimmten Unterträger kleiner als der Signal-Rauschverhältnis-Schwellwert, so werden die OFDM-Signale phasenrichtig addiert, insbesondere gemäß den oben beschriebenen Verfahren. Vorzugsweise werden die entsprechenden Unterträger vor ihrer phasenrichtigen Addition entsprechend dem Kehrwert des Signal-Rauschverhältnisses des jeweils anderen Unterträgers gewichtet.

In alternativen vereinfachten Ausführungsformen können die sich entsprechenden Unterträger in jedem Fall phasenrichtig addiert werden, insbesondere auch mit einer vorherigen Gewichtung abhängig von den jeweiligen Signal-Rauschverhältnissen, wie oben angegeben. In diesem Fall wird das Überprüfen anhand einer Signal-Rauschverhältnis-Schwellwert überflüssig.
Die Anwendung des vorgeschlagenen Verfahrens auf andere Standards, die in den nachfolgend beschriebenen Eigenschaften dem DRM Standard technisch vergleichbar sind, ist ebenfalls denkbar.

**Patentansprüche**

1.  Empfänger (1) zum optimierten Demodulieren und Dekodieren von digitalen DRM (Digital Radio Mondial)-Funksignalen, umfassend:

    - eine erste und zweite Empfangseinheit (5, 6, 7, 8, 11, 12, 13, 14) zum Empfangen eines ersten bzw. zweiten Funksignals und zum Demodulieren des ersten bzw. zweiten Funksignals zu einem ersten bzw. zweiten digitalen Zwischenfrequenzsignal, wobei
    das erste und das zweite Funksignal unterschiedliche Frequenzen aufweisen, und wobei das erste und das zweite Zwischenfrequenzsignal jeweils eine Anzahl von Unterträgern aufweist;
    - einen ersten und einen zweiten Kanalschätzer (9, 15), um eine Kanalschätzung auf das erste bzw. zweite digitale Zwischenfrequenzsignal durchzuführen, um ein erstes bzw. zweites entzerrtes digitales Zwischenfrequenzsignal (Z1, Z2) zu erhalten;
    - eine Signalkombiniereinheit, um das erste und das zweite digitale Zwischenfrequenzsignal (Z1, Z2) zu kombinieren, indem sich entsprechende Unterträger des ersten und des zweiten entzerrten digitalen Zwischenfrequenzsignals miteinander kombiniert werden;
    - einen Kanaldekodierer, um das kombinierte digitale Zwischenfrequenzsignal zu einem Bitdatenstrom zu dekodieren,

    wobei eine Synchronisationseinheit (17) vorgesehen ist, um eines der digitalen Zwischenfrequenzsignale mit einer Verzögerungszeit so zu verzögern, dass die beiden digitalen Zwischenfrequenzsignale zueinander synchron sind.

2.  Empfänger (1) nach Anspruch 1, wobei die Signalkombiniereinheit (10) das erste und das zweite digitale Zwischenfrequenzsignal kombiniert, indem die Signale der sich entsprechenden Unterträger des ersten und des zweiten entzerrten digitalen Zwischenfrequenzsignals (Z1, Z2) phasenbewertet addiert werden.

3.  Empfänger (1) nach Anspruch 2, wobei die Signalkombiniereinheit (10) das erste und das zweite digitale Zwischenfrequenzsignal (Z1, Z2) kombiniert, indem die Signale der sich entsprechenden Unterträger des ersten und des zweiten digitalen Zwischenfrequenzsignals (Z1, Z2) vor ihrer Addition gewichtet werden.

4.  Empfänger (1) nach Anspruch 3, wobei die Gewichtungsfaktoren vorzugsweise umgekehrt proportional zu einem Signal-Rausch-Abstand des jeweiligen Unterträgers oder eine Gruppe von Unterträgern des anderen digitalen Zwischenfrequenzsignals ist.

5.  Empfänger (1) nach einem der vorherigen Ansprüche, wobei die Synchronisationseinheit (17) gestaltet ist, um die Verzögerungszeit gemäß einem Kreuzkorrelationsverfahren zu bestimmen.

6.  Verfahren zum optimierten Demodulieren und Dekodieren von digitalen DRM (Digital Radio Mondial)-Funksignalen, mit folgenden Schritten:

    - Empfangen eines ersten und eines zweiten Funksignals;
    - Umsetzen des ersten und des zweiten Funksignals zu einem ersten bzw. zweiten digitalen Zwischenfrequenzsignal, wobei
    das erste und das zweite Funksignal unterschiedliche Frequenzen aufweisen, und wobei das erste und das zweite digitale Zwischenfrequenzsignal jeweils eine Anzahl von Unterträgern aufweist;
    - Durchführung einer Kanalschätzung auf das erste und das zweite digitale Zwischenfrequenzsignal, um ein erstes bzw. zweites entzerrtes digitales Zwischenfrequenzsignal (Z1, Z2) zu erhalten;
    - Kombinieren des ersten und des zweiten digitalen Zwischenfrequenzsignals, indem die sich entsprechenden Unterträger des ersten und des zweiten entzerrten Zwischenfrequenzsignals miteinander kombiniert werden;
    - Dekodieren des kombinierten Zwischenfrequenzsignals zu einem Bitdatenstrom,
    - wobei eines der digitalen Zwischenfrequenzsignale mit einer Verzögerungszeit so verzögert wird, dass die beiden digitalen Zwischenfrequenzsignale zueinander synchronisiert werden.

7.  Verfahren nach Anspruch 6, wobei das erste und das zweite digitale Zwischenfrequenzsignal kombiniert werden, indem die sich entsprechenden Unterträger des ersten und des zweiten digitalen Zwischenfrequenzsignals phasenbewertet addiert werden.

8.  Verfahren nach Anspruch 7, wobei das erste und das zweite digitale Zwischenfrequenzsignal kombiniert werden, indem die sich entsprechenden Unterträger des ersten und des zweiten Zwischenfrequenzsignals vor ihrer Addition gewichtet werden, insbesondere abhängig von entsprechenden Gewichtungsfaktoren, die umgekehrt proportional zu einem Signal-Rausch-Abstand des jeweiligen Unterträgers des anderen digitalen Zwischenfrequenzsignals sind.

**9.** Verfahren nach einem der Ansprüche 7 bis 8, wobei die digitalen Zwischenfrequenzsignale kombiniert werden, indem die entsprechenden Unterträger der digitalen Zwischenfrequenzsignale vor ihrer Addition mit komplexen Koeffizienten multipliziert werden, insbesondere derart, dass sich Störungen, die den Signalen überlagert sind, reduzieren oder auslöschen.

**10.** Verfahren nach einem der Ansprüche 6 bis 9, wobei die Verzögerungszeit gemäß einem Kreuzkorrelationsverfahren bestimmt wird.

**Claims**

**1.** Receiver (1) for optimized demodulation and decoding of digital DRM (digital radio mondial) radio signals, comprising:

    - a first and a second reception unit (5, 6, 7, 8, 11, 12, 13, 14) for receiving a first and a second radio signal, respectively, and for demodulating a first and a second radio signal, respectively, to form a first and a second digital intermediate frequency signal, respectively, wherein the first and second radio signals have different frequencies, and wherein the first and second intermediate frequency signals each have a number of subcarriers;
    - a first and a second channel estimator (9, 15) in order to perform a channel estimation for the first and a second digital intermediate frequency signal, respectively, in order to obtain a first and a second equalized digital intermediate frequency signal (Z1, Z2), respectively;
    - a signal combination unit in order to combine the first and second digital intermediate frequency signals (Z1, Z2) by virtue of corresponding subcarriers of the first and second equalized digital intermediate frequency signals being combined with one another;
    - a channel decoder in order to decode the combined digital intermediate frequency signal to form a bit data stream,

wherein a synchronization unit (17) is provided in order to delay one of the digital intermediate frequency signals by a delay time such that the two digital intermediate frequency signals are in sync with one another.

**2.** Receiver (1) according to Claim 1, wherein the signal combination unit (10) combines the first and second digital intermediate frequency signals by virtue of the signals of the mutually corresponding subcarriers of the first and second equalized digital intermediate frequency signals (Z1, Z2) being added in a phase-weighted manner.

**3.** Receiver (1) according to Claim 2, wherein the signal combination unit (10) combines the first and second digital intermediate frequency signals (Z1, Z2) by virtue of the signals of the mutually corresponding subcarriers of the first and second digital intermediate frequency signals (Z1, Z2) being weighted prior to their addition.

**4.** Receiver (1) according to Claim 3, wherein the weighting factors are preferably inversely proportional to a signal-noise ratio of the respective subcarrier or a group of subcarriers of the other digital intermediate frequency signal.

**5.** Receiver (1) according to one of the preceding claims, wherein the synchronization unit (17) is designed to determine the delay time using a cross-correlation method.

**6.** Method for optimized demodulation and decoding of digital DRM (digital radio mondial) radio signals, having the following steps:

    - receiving a first and a second radio signal;
    - converting the first and second radio signals to form a first and a second digital intermediate frequency signal, respectively, wherein the first and second radio signals have different frequencies, and wherein the first and second digital intermediate frequency signals each have a number of subcarriers;
    - performing a channel estimation for the first and second digital intermediate frequency signal in order to obtain a first and a second equalized digital intermediate frequency signal (Z1, Z2), respectively;
    - combining the first and second digital intermediate frequency signals by virtue of the mutually corresponding subcarriers of the first and second equalized intermediate frequency signals being combined with one another;
    - decoding the combined intermediate frequency signal to form a bit data stream,
    - wherein one of the digital intermediate frequency signals is delayed by a delay time such that the two digital intermediate frequency signals are synchronized to one another.

**7.** Method according to Claim 6, wherein the first and second digital intermediate frequency signals are combined by virtue of the mutually corresponding subcarriers of the first and second intermediate frequency signals being added in a phase-weighted manner.

**8.** Method according to Claim 7, wherein the first and second digital intermediate frequency signals are combined by virtue of the mutually corresponding subcarriers of the first and second intermediate frequency signals being weighted prior to their addition, particularly on the basis of appropriate weighting factors that are inversely proportional to a signal-noise ratio of the respective subcarrier of the other digital intermediate frequency signal.

**9.** Method according to either of Claims 7 and 8, wherein the digital intermediate frequency signals are combined by virtue of the corresponding subcarriers of the digital intermediate frequency signals being multiplied by complex coefficients prior to their addition, particularly such that interferences that are overlaid on the signals are reduced or cancelled out.

**10.** Method according to one of Claims 6 to 9, wherein the delay time is determined using a cross-correlation method.

## Revendications

**1.** Récepteur (1) destiné à la démodulation et au décodage optimisés de signaux radioélectriques numériques DRM (Digital Radio Mondiale), comprenant :

- une première et une deuxième unité de réception (5, 6, 7, 8, 11, 12, 13, 14) destinées à recevoir un premier ou un deuxième signal radioélectrique et à démoduler le premier ou deuxième signal radioélectrique en un premier ou deuxième signal de fréquence intermédiaire numérique,

le premier et le deuxième signal radioélectrique présentant des fréquences différentes et

le premier et le deuxième signal de fréquence intermédiaire possédant respectivement un certain nombre de sous-porteuses ;

- un premier et un deuxième estimateur de canal (9, 15), destinés à réaliser une estimation de canal sur le premier ou le deuxième signal de fréquence intermédiaire numérique afin d'obtenir un premier ou un deuxième signal de fréquence intermédiaire numérique égalisé (Z1, Z2) ;

- une unité de combinaison de signaux destinée à combiner le premier et le deuxième signal de fréquence intermédiaire numérique (Z1, Z2) en combinant entre elles les sous-porteuses qui correspondent les unes aux autres du premier et du deuxième signal de fréquence intermédiaire numérique égalisé ;

- un décodeur de canal afin de décoder le signal de fréquence intermédiaire numérique combiné en un flux de données binaires,

une unité de synchronisation (17) étant présente pour retarder l'un des signaux de fréquence intermédiaire numériques d'un temps de retard de telle sorte que les deux signaux de fréquence intermédiaire numériques soient synchrones l'un à l'autre.

**2.** Récepteur (1) selon la revendication 1, l'unité de combinaison de signaux (10) combinant le premier et le deuxième signal de fréquence intermédiaire en ce que les signaux des sous-porteuses qui correspondent les unes aux autres du premier et du deuxième signal de fréquence intermédiaire numérique égalisé (Z1, Z2) sont additionnés avec évaluation de phase.

**3.** Récepteur (1) selon la revendication 2, l'unité de combinaison de signaux (10) combinant le premier et le deuxième signal de fréquence intermédiaire (Z1, Z2) en ce que les signaux des sous-porteuses qui correspondent les unes aux autres du premier et du deuxième signal de fréquence intermédiaire numérique égalisé (Z1, Z2) sont pondérées avant leur addition.

**4.** Récepteur (1) selon la revendication 3, les facteurs de pondération étant de préférence inversement proportionnels à un écart signal-bruit de la sous-porteuse respective ou d'un groupe de sous-porteuses de l'autre signal de fréquence intermédiaire numérique.

**5.** Récepteur (1) selon l'une des revendications précédentes, l'unité de synchronisation (17) étant configurée pour déterminer le temps de retard conformément à un procédé de corrélation croisée.

**6.** Procédé de démodulation et de décodage optimisés de signaux radioélectriques numériques DRM (Digital Radio Mondiale), comprenant les étapes suivantes :

- réception d'un premier et d'un deuxième signal radioélectrique ;

- conversion du premier et du deuxième signal radioélectrique en un premier ou deuxième signal de fréquence intermédiaire numérique,

le premier et le deuxième signal radioélectrique présentant des fréquences différentes et

le premier et le deuxième signal de fréquence intermédiaire possédant respectivement un certain nombre de sous-porteuses ;

- réalisation d'une estimation de canal sur le premier et le deuxième signal de fréquence intermédiaire numérique afin d'obtenir un premier ou un deuxième signal de fréquence intermédiaire numérique égalisé (Z1, Z2) ;

- combinaison du premier et du deuxième signal de fréquence intermédiaire numérique en ce que les sous-porteuses qui correspondent les unes aux autres du premier et du deuxième signal de fréquence intermédiaire numérique égalisé sont combinées entre elles ;

- décodage du signal de fréquence intermédiaire combiné en un flux de données binaires,

- l'un des signaux de fréquence intermédiaire numériques étant retardé d'un temps de retard de telle sorte que les deux signaux de fréquence intermédiaire numériques soient synchronisés l'un sur l'autre.

7.   Procédé selon la revendication 6, le premier et le deuxième signal de fréquence intermédiaire numérique étant combinés en ce que les sous-porteuses qui correspondent les unes aux autres du premier et du deuxième signal de fréquence intermédiaire numérique sont additionnées avec évaluation de phase.

8.   Procédé selon la revendication 7, le premier et le deuxième signal de fréquence intermédiaire numérique étant combinés en ce que les sous-porteuses qui correspondent les unes aux autres du premier et du deuxième signal de fréquence intermédiaire numérique sont pondérées avant leur addition, notamment en fonction de facteurs de pondération correspondants qui sont inversement proportionnels à un écart signal-bruit de la sous-porteuse respective ou d'un groupe de sous-porteuses de l'autre signal de fréquence intermédiaire numérique.

9.   Procédé selon l'une des revendications 7 à 8, les signaux de fréquence intermédiaire numériques étant combinés en ce que les sous-porteuses correspondantes des signaux de fréquence intermédiaire numériques sont multipliées par des coefficients complexes avant leur addition, notamment de telle sorte que les perturbations qui sont superposées aux signaux soient réduites ou s'effacent.

10. Procédé selon l'une des revendications 6 à 9, le temps de retard étant déterminé conformément à un procédé de corrélation croisée.

Fig. 1

EP 1 804 396 B1

Fig. 2a

Fig. 2b

Fig. 2c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6512738 B1
- US 6172970 B1
- EP 1566899 A1